(19) Europäisches Patentamt European Patent Office Office européen des brevets

(11) **EP 4 664 426 A1**

(12) **EUROPEAN PATENT APPLICATION**

(43) Date of publication:
**17.12.2025  Bulletin 2025/51**

(21) Application number: **24182022.4**

(22) Date of filing: **13.06.2024**

(51) International Patent Classification (IPC):
**G06V 30/186** (2022.01)   **G06V 10/12** (2022.01)
**G06V 10/44** (2022.01)   **G06V 20/52** (2022.01)

(52) Cooperative Patent Classification (CPC):
**G06V 30/186; G06V 10/12; G06V 10/44;
G06V 20/52**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Ostbayerische Technische
Hochschule Regensburg
93053 Regensburg (DE)**

(72) Inventors:
• **Galka, Stefan
85419 Mauern (DE)**
• **Brunnbauer, Florian
93155 Hemau (DE)**

(74) Representative: **Lucke, Andreas
Boehmert & Boehmert
Anwaltspartnerschaft mbB
Pettenkoferstrasse 22
80336 München (DE)**

(54)   **COMPUTER-IMPLEMENTED METHOD FOR DETERMINING AN INVENTORY OF A FLOW RACK**

(57)   A computer-implemented method is for determining an inventory of a flow rack is presented. The flow rack comprises a shelf. The shelf, which may also be referred to as a row of bay compartments spanning the length of the flow rack, is arranged at a tilting angle with respect to a horizontal reference plane. A number of objects is arranged on the shelf. Each of the objects has the same object height and the same object length. The method comprises: Determining, from an image of the shelf, a vertical edge position of an upper edge and/or of a lower edge of an uppermost object of said number of objects arranged on the shelf; and deriving said number of objects arranged on the shelf based on the vertical edge position determined from the image.

**Fig. 1a**

EP 4 664 426 A1

**Description**

TECHNICAL FIELD

The disclosure relates to a computer-implemented method for determining an inventory of a flow rack, in particular using image recognition and more specifically using edge recognition.

BACKGROUND

A flow rack provides a shelf with an inclined surface for storing objects thereon. The inclination serves to transport the objects from one side, referred to as the input side, to the other side, referred to as the output side, of the flow rack. The shelf is often, but not necessarily, provided with cylindrical rolls rotatably mounted at/to the inclined surface to ensure an effective transport of the objects from the input side to the output side. The principal advantage of flow racks is their capacity for storing a high volume of items in close proximity, and that flow rack always (i.e., independent of the filling level, or of the inventory, respectively) provides an item available at the output side. This allows for the efficient use of shelf space and the convenient arrangement of multiple objects on a single shelf.

Flow racks are commonly used in production environments to provide components for assembling and in order picking systems to provide articles to the picker in a compact manner.

The stored objects typically take the form of small load carriers, also referred to as Euro containers, Euroboxes, Euro crates or KLT boxes (from German: Kleinladungsträger). The small load carriers are available in various sizes, which are, in some jurisdictions, regulated by industrial norms. For example, in Europe, small load carriers typically have heights of 147.5 mm or 280 mm, and lengths of 300 mm, 400 mm, 600 mm, or 800 mm (according to the VDA Standard 4500). To ensure an efficient transport of the small load carriers, as well as efficiency in loading the flow rack, any shelf of the flow rack is typically only loaded with small load carriers of equal sizes. In a typical setup, the small load carriers on the same shelf of the flow rack each contain the same material or article type. Commonly, all shelves of a bay of the flow rack are loaded with small load carriers of equal sizes and contain the same material or article type.

In an industrial production environment, such as a factory hall, dozens or even hundreds of flow racks may be present. Although attempts have been made to equip flow racks with sensors, the sheer number of flow racks in the industrial production environment makes keeping track of the inventory of all of them into a challenge.

OVERVIEW

In view of the technical problems laid out above, there is a need for improvements in determining the inventory of a flow rack. This objective is achieved with the computer-implemented method according to claim 1, a computer program according to claim 12, and a computer system according to claim 13. The dependent claims refer to advantageous embodiments.

According to a first aspect, a computer-implemented method for determining an inventory of a shelf of a flow rack is provided. The shelf is arranged at a tilting angle with respect to a horizontal reference plane. A number of objects is arranged on the shelf. Each of the objects has the same object height and the same object length. The method comprises: Determining, from an image of the shelf, a vertical edge position of an upper edge and/or of a lower edge of an uppermost object of said number of objects arranged on the shelf; and deriving said number of objects arranged on the shelf based on the vertical edge position determined from the image.

The inventors have realized that the inventory, i.e., the filling level, of a flow rack can be derived from the vertical edge position (i.e., the vertical position of an upper edge or of a lower edge) of only one of the objects in the flow rack, namely, of the uppermost object in the flow rack, as determined from an image of the flow rack, or of the shelf, respectively. This is an immediate consequence of the inclination, or of the tilting angle, respectively, of the shelf of the flow rack: When the shelf of the flow rack is filled to a high filling level, the uppermost object (and the vertical edges thereof) are located at a higher position; and when the shelf of the flow rack is filled to a low filling level, the uppermost object (and the vertical edges thereof) are located at a lower position. Hence, the vertical edge position as determined from the image gives a direct measure of the filling level, or the inventory, respectively, of the flow rack, or of the shelf, respectively. Typically, the upper edge and/or the lower edge is horizontal or approximately horizontal, for example physically and/or according to its appearance in said image. The vertical edge position may alternatively be referred to as the first vertical position.

The method advantageously makes use of the fact that the shelf of a flow rack is filled with objects (such as small load carriers, Euro containers, Euroboxes, Euro crates, or KLT boxes, ...) of identical dimensions. Hence, even if only the vertical edge of the uppermost object is visible in the image, the image still provides sufficient information to reliably extract the filling level.

The method can be carried out using existing image recognition techniques to determine the vertical edge position. Respective techniques are well known to the person skilled in the art. The requirement to the computer system carrying out the image recognition are moderate, such that the method can be carried out by a compact and cost-economic computer system.

Consequently, the implementation of the method is technically feasible and economically attractive. Moreover, because of the potential compactness and the low price of the computer system, a plurality of respective computer systems carrying out the method may be installed in the industrial production environment, to carry out the method in parallel and to keep track of the inventory of a large number of flow racks.

Advantageously, implementing the method does not require any structural elements, in particular, electronic elements, physically connected to the flow rack. To the contrary, a camera for capturing the image can be installed remotely from the flow rack. This avoids the need for wiring to the flow rack, e.g., to provide electrical power or a data line for the camera. For example, the camera can be mounted to a factory wall supporting the wiring, or, preferably, to a vehicle, which may not only provide electrical power through its battery system, but also a computer system for carrying out the method, a transmitter for providing the derived number of objects for further processing, and/or sensors for determining the position and/or orientation of the camera to trigger the acquisition of the image.

According to some aspects, deriving said number of objects comprises comparing the determined vertical edge position to a plurality of expected edge positions, each of the expected edge positions corresponding to a vertical position of an upper edge and/or of a lower edge of an uppermost object for a corresponding hypothetical number of objects arranged on the shelf.

The provision of expected edge positions and the comparison of the determined vertical edge position thereto provides a particularly efficient way of deriving the filling level from the determined vertical edge position. For example, the expected edge position may be derived from a series of images showing the shelf at different filling levels. Comparison of the determined vertical edge position thereto allows for quickly and reliably deriving the inventory of the flow rack.

According to some embodiments, the method comprises calculating, using information about the object height, information about the object length, and information about the tilting angle, the plurality of expected edge positions for the corresponding hypothetical numbers of objects arranged on the shelf.

The inventors have realized that based on the respective information, for any hypothetical number of objects arranged on the shelf, the corresponding vertical edge position can be calculated, or predicted, respectively, applying trigonometric functions well known to the person skilled in the art. The respective calculations are fast, with minimum hardware requirements, and can be used to flexibly determine the expected edge positions for all possible fill levels, or for all possible (hypothetical) numbers of objects arranged on the shelf, respectively. This holds true even if the dimensions of the objects change, for example, when a different type of small load carriers with different dimensions is loaded onto the shelf, given that the information about the object height and about the object length is provided for the newly loaded objects.

According to some embodiments, the shelf is located at a shelf height; a viewpoint of the image of the shelf is located at an image viewpoint height; and calculating the expected edge positions uses information about the image viewpoint height relative to the shelf height, or uses information about the image viewpoint height and the shelf height. The method may optionally comprise retrieving the information about the shelf height and/or about the image viewpoint height from a database.

In respective embodiments, which account for the relative (or absolute) heights of the shelf and the viewpoint of the image, the vertical position of the camera may change, for example, when iteratively executing the method. In other words, the camera may be mounted moveably along the vertical direction, for example in a rail or on movable part of the boom of a forklift, such as a forklift. Consequently, a single camera may be used to acquire images of several or all shelves of a flow rack, even if the respective shelves would obscure each other in a single image recorded at a single image viewpoint height.

According to some embodiments, the shelf is arranged at the tilting angle with respect to the horizontal reference plane along a tilting direction and wherein the expected edge positions are calculated further using information about a length of the shelf along the tilting direction, in particular, wherein the shelf declines along the tilting direction.

The method may further comprise deriving the information about the tilting angle and/or the information about the length of the shelf, and optionally, in addition, the information about the object height, the information about the object length and/or the information about the image viewpoint height relative to the shelf height (h2a, h2b), from a front-view image of the shelf, wherein the front-view image of the shelf is an image viewing the shelf from a direction at an angle of at least 30° with respect to the tilting direction according to a projection onto the horizontal reference plane, in particular, viewing the shelf from a direction perpendicular to the tilting direction according to a projection onto the horizontal reference plane.

In respective embodiments, the method may further comprise acquiring the front-view image of the shelf, for example using an imaging device, such as an imaging device mounted to a vehicle and/or an imaging device at a location along said direction. Alternatively, or in addition, the flow rack may be provided with a front-view reference object, such as a front-view reference object facing away from the tilting direction, and the information about the tilting angle and/or the information about the length of the shelf, and optionally, in addition, the information about the object height, the information about the object length and/or the information about the image viewpoint height relative to the shelf height, may be derived from the front-view image of the shelf based on the front-view reference object as a size reference.

Determining the vertical edge position may comprises performing an edge detection on the image of the shelf.

Techniques for edge detection are known to the person skilled in the art. They are fast, with moderate hardware requirements.

The vertical edge position may be determined using information about a vertical angle of view associated with the image of the shelf. In particular, the vertical edge position may be determined from the relative position of an edge found in the edge detection relative to an upper edge and a lower edge of the image of the shelf, the upper edge and the lower edge corresponding to the vertical angle of view.

Referencing the vertical edge position to the vertical angle of view (also known as vertical frustrum) of the image, e.g., as known technical information about a camera that the image was recorded with, provides a viable, fast, and computationally little demanding method for referencing the image information to real-world coordinates and real-world heights/vertical positions.

The expected edge positions may refer to positions of the respective edges as expected in the image of the shelf.

Each of the expected edge positions may refer to the expected vertical position of an uppermost edge of the respective hypothetical number of the objects arranged on the shelf. In respective embodiments, the determined vertical edge position may refer to an uppermost edge of the uppermost object of the number of the objects arranged on the shelf.

The hypothetical number for which the expected edge position is closest to the determined vertical edge position may be identified as the number of the objects arranged on the shelf.

A respective comparison provides a computationally efficient and reliable method for deriving the number of objects arranged on the shelf.

The method may further comprise providing tolerance ranges associated with the expected edge positions.

According to some embodiments, the hypothetical number for which the expected edge position is closest to the determined vertical edge position is identified as the number of the objects arranged on the shelf only if the determined vertical edge position deviates from the respective expected edge position by no more than the tolerance range associated with the respective expected edge position.

Respective embodiments improve the reliability of deriving the number of objects arranged on the shelf. More specifically, if erroneously a vertical edge position is determined from the image, which does not correspond to the upper edge and/or to the lower edge of the uppermost object (but, for example, to an unrelated object in the image), this erroneous edge position may deviate from the respective expected edge position by more than the tolerance range, and will in this case be excluded from deriving/identifying the number of objects arranged the shelf.

Alternatively, or in addition, the method may comprise, in case that the determined vertical edge position deviates from the expected edge position closest to the determined vertical edge position by more than the tolerance range associated with the respective expected edge position: receiving at least one additional image of the shelf; repeating the process steps relating to the image of at least one of the embodiments described above with the at least one additional image replacing the image of the at least one of the embodiments described above, until the vertical edge position determined from one of the at least one additional images of the shelf deviates from one of the expected edge positions by no more than the tolerance range associated with the respective expected edge position; and identifying the hypothetical number associated with the respective expected edge position as the number of objects arranged on the shelf.

In respective embodiments, the additional image is used for deriving/identifying the number of objects arranged on the shelf, rather than the original/initial image, namely, the additional image in which the vertical edge position is sufficiently close (as defined by the associated tolerance range) to the expected edge position. The proximity of the vertical edge position to the expected edge position in the additional image ensures a reliable derivation/identification of the number of objects arranged on the shelf.

In some embodiments, the tolerance ranges associated with neighboring expected edge positions cover no more than two thirds of the distance between the neighboring expected edge positions, or no more than half the distance between the neighboring expected edge positions, or no more than one third of the distance between the neighboring expected edge positions.

The image of the shelf may show the shelf from the side, for example from a side corresponding to an input side of the flow rack.

Alternatively, or in addition, the shelf may be arranged at the tilting angle with respect to the horizontal reference plane along a tilting direction, and the image of the shelf may view along the tilting direction, in particular, along a direction along which the shelf declines.

A respective geometry ensures that the upper edge and/or the lower edge of the uppermost object is reliably visible in the image, with a minimum of additional, potentially interfering vertical edges visible in the image.

The method may comprise, prior to determining the vertical edge position from the image of the shelf, acquiring, using an imaging device, the image of the shelf. In some embodiments, the imaging device comprises or is a camera.

The imaging device may be located at an imaging device height when acquiring the image of the shelf; and the method may use information about the imaging device height, for example in the process step(s) of determining the vertical edge position, deriving the number of objects arranged on the shelf calculating the expected edge positions, and/or comparing the determined vertical edge position to the expected edge positions.

The expected edge positions may be edge positions as expected in the image of the shelf as acquired using the imaging device.

The imaging device height may be a predetermined height. Optionally, the method may comprise arranging the imaging device at the predetermined imaging device height.

The method may comprise determining the imaging device height, in particular, using sensor data from an altitude sensor and/or from a location sensor associated with the imaging device and/or from a motion sensor associated with the imaging device.

The method may use information about a vertical viewing direction of the imaging device, for example in the process step(s) of determining the vertical edge position, deriving the number of objects arranged on the shelf, calculating the expected edge positions, and/or comparing the determined vertical edge position to the expected edge positions.

A vertical angle of view of the imaging device may determine the vertical angle of view associated with the image of the shelf.

The imaging device may be aligned to view along a horizontal direction.

The imaging device height may correspond to the image viewpoint height described above.

The acquisition of the image using the imaging device improves the control over the image, for example with respect to the viewing direction or the image viewpoint height. Consequently, the number of objects can be derived from the respective image more reliably.

The imaging device may be mounted to a vehicle.

This way, the imaging device becomes mobile, permitting to acquire images of more flow racks with the imaging device. In other words, fewer imaging devices are needed to acquire images of all flow racks in a given environment, and the cost-efficiency of the system is improved.

The vehicle may be a transport vehicle suitable for or adapted to transport said objects to the shelf.

Respective transport vehicles are readily available in an industrial production environment, and making use of those vehicles to provide mobility to the imaging device avoids the need for additional equipment such as a dedicated transport robot or drone.

Moreover, the transport vehicles available in an industrial production environment are typically equipped with a battery system, which may be used for providing electrical power to the imaging device, and/or with sensors for determining the position and/or orientation of the imaging device. Using the respective installations of the transport vehicle avoids the need for additional equipment, such as additional battery systems or sensors for the imaging device.

In particular, the vehicle may be adapted to replenish the shelf from a first position of the vehicle, and the image of the shelf may be acquired when the vehicle is at said first position.

In embodiments, wherein the image of the shelf shows the shelf from the side, for example from the side corresponding to the input side of the flow rack; and/or wherein the image of the shelf views along the tilting direction, for example along the direction along which the shelf declines, the image of the shelf may be acquired when a horizontal viewing direction of the imaging device faces the shelf along the tilting direction and/or from the side, preferably from the side corresponding to the input side of the shelf and/or along the tilting direction.

According to some embodiments, the method further comprises acquiring, using the imaging device, another image of another shelf, wherein the other shelf is a shelf of another flow rack, wherein the other shelf is arranged at another tilting angle with respect to the horizontal reference plane; wherein a number of other objects is arranged on the other shelf; wherein each of the other objects has a same, additional object height and a same, additional object length; and wherein the method further comprises performing all process steps specified in any of the embodiments described above with respect to the image, the flow rack, and their associated features with respect to the other image, the other flow rack, and their associated features.

The method may further comprise transporting, using the vehicle, further ones of said objects to the shelf for replenishing the shelf.

An identifier may be associated with or may be arranged on the flow rack.

A respective identifier advantageously permits to identify the respective flow rack, and to read the related information (associated with the flow rack and/or with the objects stored on a shelf thereof) from the identifier or to request them from a database, using a request based on the identifier. The obtained information can be used, for example, to calculate expected edge positions, for example when the type of objects arranged on the shelf changes due to a changeover in the production process.

The method may further comprise reading the identifier using the imaging device described above, for example from the acquired image.

This improves the usage of the imaging device, and avoids the need for an additional identifier system such as an RFID system.

The method may further comprise reading at least one or all the information about the object height, the information about the object length, and the information about the tilting angle from the identifier, preferably using the imaging device described above.

The method may comprise requesting, using the identifier, at least one or all the information about the object height, the information about the object length, and the information about the tilting angle from a database.

The database may be provided on a remote server remote from the imaging device and/or from the vehicle.

A computer may be associated with the imaging device and/or arranged in a vicinity of the imaging device and/or arranged on said vehicle, the remote server being remote from said computer, wherein, preferably, at least one or both of the process steps of determining the vertical edge position and comparing the determined vertical edge position to expected edge positions is/are performed on said computer.

The method may comprise sending the derived number of objects arranged on the shelf to the remote server, for example from the computer associated with the imaging device and/or arranged in the vicinity of the imaging device and/or arranged on said vehicle.

The method may further comprise requesting information about the image viewpoint height and/or about the shelf height from the database, for example using the identifier.

The method may further comprise requesting information about the tilting direction from the database, for example using the identifier.

According to some embodiments, the method further uses information about a first distance between the shelf and a viewpoint of the image of the shelf and/or information about a relative position of the shelf and the viewpoint of the image of the shelf, for example in the process step(s) of determining the vertical edge position, deriving the number of objects arranged on the shelf, calculating the expected edge positions, and/or comparing the determined vertical edge position to the expected edge positions.

According to some embodiments, a reference object, such as a reference object for determining the first distance between the shelf and the viewpoint of the image of the shelf and/or information about the relative position of the shelf and the viewpoint of the image of the shelf, is associated with or arranged on the flow rack. In respective embodiments, the method comprises, prior to determining the vertical edge position from the image of the shelf, acquiring, using an imaging device, the image of the shelf; and the method further comprises imaging the reference object in the acquired image. In respective embodiments, the information about the first distance between the shelf and the viewpoint of the image of the shelf and/or the information about the relative position of the shelf and the viewpoint of the image of the shelf is retrieved from the reference object as imaged in the acquired image.

Optionally, the reference object serves as the identifier described above.

According to some embodiments, the method further comprises, using the derived number of objects arranged on the shelf, requesting a replenishment of the shelf, in particular, if the hypothetical number corresponding to the number of the objects arranged on the shelf is below a threshold number; and/or inputting the deriving number of objects arranged on the shelf into a database for training an artificial intelligence to determine when a replenishment of the shelf is to be scheduled.

According to some embodiments, the flow rack comprises a plurality of shelves comprising said shelf and an additional shelf, wherein an additional number of additional objects are arranged on the additional shelf; wherein each of the additional objects has the same additional object height and the same additional object length. According to respective embodiments, the method further comprises the following additional process steps: Determining, from the image of the shelf, an additional vertical edge position of an upper edge and/or of a lower edge of an uppermost object of said additional number of additional objects arranged on the additional shelf; and deriving said additional number of additional objects arranged on the additional shelf based on the additional vertical edge position determined from the image.

The additional process steps may be performed for any additional shelf comprised in the flow rack.

Determining the additional vertical edge position may be performed according to any of the features described above in the context of determining the vertical edge position. Alternatively, or in addition, deriving said additional number of additional objects arranged on the additional shelf based on the additional vertical edge position determined from the image may be performed according to any of the features described above in the context of deriving the number of objects arranged on the shelf based on the vertical edge position determined from the image.

According to another aspect, a computer program is provided comprising instructions which, when the computer program is executed by a computer, cause the computer to carry out the method of any of the embodiments described above.

According to another aspect, a computer system is provided comprising at least one processor and at least one memory. The at least one processor is adapted to determine, from an image of a shelf of a flow rack, a vertical edge position of an upper edge and/or of a lower edge of an uppermost object of a number of objects arranged on the shelf; and to derive the number of said objects arranged on the shelf based on the vertical edge position determined from the image. The shelf is arranged at a tilting angle with respect to a horizontal reference plane. The number of objects arranged on the shelf is derived based on the vertical edge position determined from the image assuming that each of the objects has the same object height and the same object length.

The computer system may further comprise an imaging device adapted to acquire the image of the shelf and to provide the image of the shelf to the at least one processor.

The at least one processor may further be adapted to receive information about the tilting angle of the shelf with respect to the horizontal reference plane.

The at least one processor may further be adapted to receive information about an object height and information about an object length of objects suitable for arranging them on the shelf.

The at least one processor may be adapted to, to derive the number of said objects arranged on the shelf: compare the determined vertical edge position to a plurality of expected edge positions to determine the hypothetical number corresponding to the number of objects arranged on the shelf, each of the expected edge positions corresponding to a vertical position of an upper edge and/or of a lower edge of an uppermost object for a corresponding hypothetical number of objects arranged on the shelf. In respective embodiments, the at least one processor is optionally further adapted to calculate, using the information about the object height, the information about the object length, and the information about the tilting angle, and assuming that each of the objects has a same height given by the object height and a same length given by the object length, the expected edge positions for the different hypothetical numbers of objects arranged on the shelf.

The computer system may further comprise the imaging device described above, and the computer system may further comprise a vehicle, wherein the imaging device is mounted to the vehicle.

According to some embodiments, a processor of the at least one processor and a memory of the at least one memory are arranged on the vehicle, and the vertical edge position is determined by the processor arranged on the vehicle. In respective embodiments, the determined vertical edge position is preferably compared to the expected edge positions by the processor and the memory arranged on the vehicle.

The computer system may further comprise a remote server remote from the vehicle and/or from said processor of the at least one processor and/or from said memory of the at least one memory. The remote server may be adapted to receive, to store, and/or to process the hypothetical number corresponding to the number of objects arranged on the shelf.

The remote server may be adapted to provide the information about the object height, the information about the object length, and the information about the tilting angle from a database provided on the remote server.

BRIEF DESCRIPTION OF THE FIGURES

The techniques of the present disclosure and the advantages associated therewith will be best apparent from a description of exemplary embodiments in accordance with the accompanying drawings, in which:

| | |
|---|---|
| Fig. 1a, | illustrates a method according to an embodiment; |
| Fig. 1b, Fig. 1c | illustrate a method according to another embodiment; |
| Fig. 2a, Fig. 2b | illustrate a method according to another embodiment; |
| Fig. 3a, Fig. 3b | illustrate a method according to another embodiment; |
| Fig. 4a, Fig. 4b, Fig. 4c | illustrate a flow rack; |
| Fig. 5a, Fig. 5b | illustrate a method according to another embodiment; |
| Fig. 6 | illustrates a computer system and a vehicle according to an embodiment; |
| Fig. 7 | illustrates a route of a vehicle in a production environment; |
| Fig. 8 | illustrates an identifier and a reference object; |
| Fig. 9 | illustrates a method according to another embodiment; and |
| Fig. 10 | illustrates a computer system according to another embodiment. |

DETAILED DESCRIPTION OF EMBODIMENTS

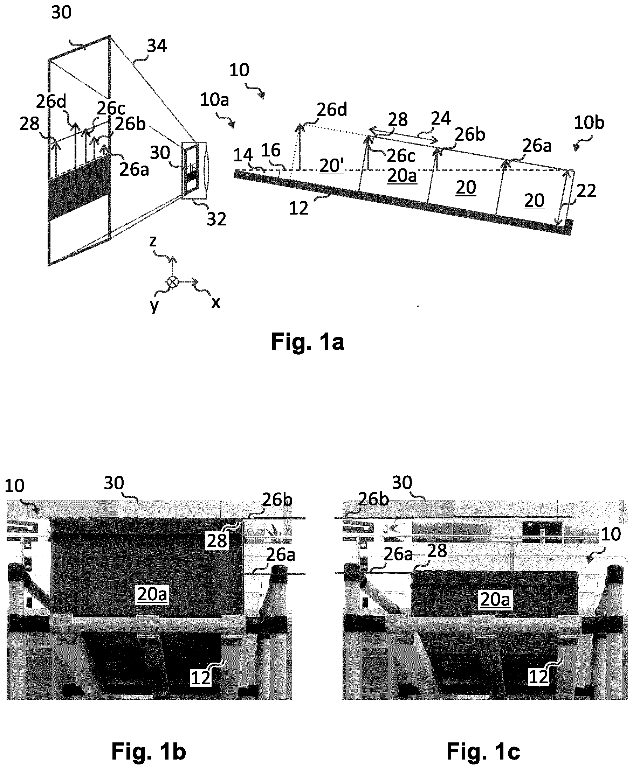

Fig. 1a illustrates a computer-implemented method for determining an inventory of a flow rack 10 according to an embodiment.

A shelf 12 of the flow rack 10 is inclined, or tilted, respectively, at an angle 14 with respect to the horizontal plane 16. Throughout the figures, the horizontal plane corresponds to the x-y-plane. The shelf is tilted/inclined along the x-direction.

Objects 20, 20a, each having the same height (object height) 22 and length (object length) 24 are stored on the shelf 12. Object 20a is the uppermost one of the objects 20, 20a.

When the lowermost one of the objects 20, 20a is taken out of the shelf 12, or out of the flow rack 10, respectively, at the lower side (output side) 10b of the shelf 12, or of the flow rack 10, respectively, the inclination, or tilt, respectively, of the shelf 12 causes the other objects 20, 20a to slide down the shelf 12. The lowermost one of the remaining objects 20, 20a takes the position of the object 20, 20a, which had previously been the lowermost one, and can be taken out of the shelf 12, or out of the flow rack 10, respectively, from the same position. This way, the shelf 12, or the flow rack 10, respectively, can continuously provide the objects 20, 20a at a constant output position, typically for further processing or assembling in an industrial production environment.

In the depicted embodiment, the right-hand side 10b of the shelf 12, or of the flow rack 10, respectively, serves as the output side 10b, and the left-hand side 10a of the shelf 12, or of the flow rack 10, respectively, serves as an input side 10a for replenishing the shelf 12, or the flow rack 10, respectively, with objects 20, 20a.

As described above, when the lowermost one of the objects 20, 20a is taken out of the shelf 12, all remaining objects 20, 20a move down the shelf 12. This applies, in particular, to the uppermost object 20a. Hence, the position of the uppermost object 20a is correlated with the filling level of the shelf 12. For example, in a state of the shelf 12 prior to the one depicted in Fig. 1a, the shelf 12 had a higher filling level (not shown), and the uppermost object 20a was at the position 20', which is a possible position 20' for an object 20, 20a. When the lowermost one of the object 20, 20a was taken out from the shelf 12 with this higher filling level, the uppermost object 20a moved down from the previous position 20' to its current position 20a as depicted in Fig. 1a.

The method for determining the inventory of the shelf 12 of the flow rack 10 is based on the realization that the position of the uppermost object 20a, and, more particularly, of its upper edge and its lower edge, fully reflects the filling level of the shelf 12.

To determine the position of the upper edge and/or of the lower edge of the uppermost object 20a, an image 30 of the shelf 12 is acquired. The image 30 may be acquired from any viewpoint from which the respective upper edge and/or lower edge is visible, however, the image 30 is preferably acquired from the input side 10a of the flow rack 10 as a viewpoint. From this side, the flow rack 10 is typically well accessible for delivery of further objects 20, 20a, and therefore also for a camera 32 for acquiring the image 30.

For the sake of clarity, a close-up 34 of the image 30 acquired with the camera 32 is given in Fig. 1a (i.e., to the left-hand side of the camera 32 and the image 30).

The image 30 is an electronic image, or a digital image, respectively. In the image 30, the vertical position (vertical edge position) 28 of the upper edge 28a of the uppermost object 20a is determined. A conventional edge recognition or edge detection algorithm is applied for this purpose.

As laid out above, the vertical edge position 28 reflects the inventory, or the filling level, respectively, of the shelf 12, or the number of objects 20, 20a arranged on the shelf 12, respectively. Based on this correlation, the number of objects 20, 20a arranged on the shelf 12 is derived from the determined vertical edge position 28.

According to an embodiment A, determined vertical edge positions 28 are calibrated against known numbers of objects 20, 20a arranged on the shelf 12 for this purpose. More specifically, to provide a reference, the shelf 12 is filled with different reference numbers of objects 20, 20a (e.g., 1, 2, 3, 4, ...) and the corresponding reference vertical edge positions 26a, 26b, 26c, 26d are measured and stored in a database. In respective embodiments, to derive the number of objects 20, 20a at an arbitrary, unknown filling level of the shelf 12, the vertical edge position 28 determined at the respective filling level is compared against the measured and stored reference vertical edge positions 26a, 26b, 26c, 26d. The reference number of objects 20, 20a, for which the corresponding reference vertical edge position 26a, 26b, 26c, 26d is closest to the determined vertical edge position 28 is identified as the number of objects 20, 20a actually arranged on the shelf 12.

According to another embodiment B, an artificial intelligence is trained to correlate the determined vertical edge position 28 with the number of objects 20, 20a on the shelf 12. During training, the artificial intelligence receives the image 30 from the camera 32 continuously, i.e., as the filling level of the shelf 12 changes. These data, and, according to some embodiments, additional information (e.g., from a mechanical sensor or from a human input) giving the actual number of objects 20, 20a arranged on the shelf 12, are used to train an artificial neural network of the artificial intelligence. After the training, the artificial intelligence derives the actual number of objects 20, 20a arranged on the shelf 12 from the determined vertical edge position 28 at an arbitrary filling level of the shelf 12.

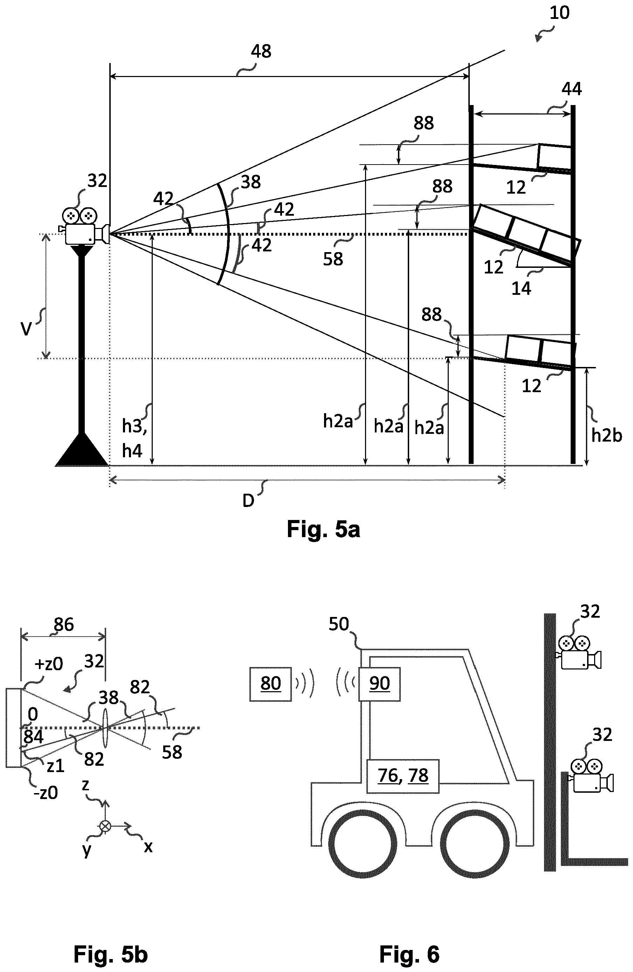

According to yet another embodiment C, expected vertical edge positions 26a, 26b, 26c, 26d are simulated, or calculated, respectively, for different hypothetical numbers of objects 20, 20a arranged on the shelf 12, for example using the calculation laid out in detail below in the context of Fig. 5a, Fig. 5b. The determined vertical edge position 28 is compared to those expected vertical edge positions 26a, 26b, 26c, 26d, and the hypothetical number of objects 20, 20a, for which the corresponding, calculated expected vertical edge position 26a, 26b, 26c, 26d is closest to the determined vertical edge position 28 is identified as the number of objects 20, 20a actually arranged on the shelf 12.

The latter embodiment C is similar to the embodiment A described above, using the reference vertical edge positions 26a, 26b, 26c, 26d. Both embodiments are examples of a method comprising a comparison between the determined vertical edge position 28 and expected vertical edge positions 26a, 26b, 26c, 26d; although these expected vertical edge positions 26a, 26b, 26c, 26d are derived from experiments/phenomenologically in one embodiment (embodiment A), and according to simulations/calculations in the other embodiment (embodiment C).

A further embodiment D concerns a variation of the embodiment C described above, in which expected vertical edge positions 26a, 26b, 26c, 26d are simulated, or calculated, respectively, for different hypothetical numbers of objects 20, 20a. According to the variation, the inverse calculation of the abovementioned calculation is performed, to calculate a number of objects 20, 20a actually arranged on the shelf 12 from the determined vertical edge position 28. Due to inaccuracies in determining the vertical edge position 28, the resulting, calculated number of objects 20, 20a arranged on the shelf 12 is in general not an integer number. The respective number is rounded to the closest integer number, which is identified as the number of objects 20, 20a actually arranged on the shelf 12.

The camera 32 according to the depicted embodiment may be installed at a fixed position. However, preferably, the camera 32 is mobile, and, e.g., mounted on a vehicle. Any time the camera 32 reaches the position indicated in Fig. 1a and described above, the camera 32 is triggered to acquire an image 30. This way, a single camera 32 can be applied to provide respective images 30 of various flow racks 10. Respective vehicles are readily available in an industrial production environment, for example for replenishing the flow racks 10.

Fig. 1b, Fig. 1c give images 30 as applied in the method according to an embodiment. The images 30 show/view the same flow rack 10, or shelf 12, respectively, from its input side 10a.

Expected vertical edge position 26a, 26b are depicted in the images 30 for two different filling levels/inventories of the shelf 12. The expected vertical edge position 26a corresponds to one object 20a stored on the shelf 12, and the expected vertical edge position 26b corresponds to two objects 20, 20a stored on the shelf 12. The respective expected vertical edge positions 26a, 26b have been calculated using the method described below in detail in the context of Fig. 5a, Fig. 5b.

The uppermost object 20a is visible in each of the images 30.

An edge detection is performed on each of the images 30 to determine the respective vertical edge position 28 of the upper edge 28a of the uppermost object 20a in each of the images 30.

In the image 30 of Fig. 1b, the determined vertical edge position 28 is closest to the expected vertical edge position 26b corresponding to two objects 20, 20a stored on the shelf 12. An inventory/filling level/number of objects 20, 20a arranged on the shelf 12 of two is derived.

In the image 30 of Fig. 1c, the determined vertical edge position 28 is closest to the expected vertical edge position 26a corresponding to one object 20a stored on the shelf 12. An inventory/filling level/number of objects 20a arranged on the shelf 12 of one is derived.

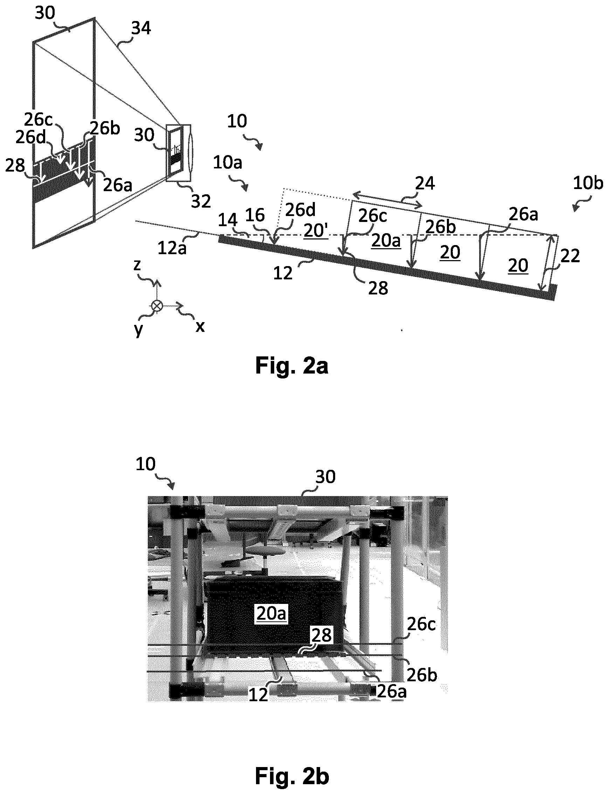

Fig. 2a and Fig. 2b illustrate an embodiment of the method similar to the embodiment of Fig. 1a and to the embodiment of Fig. 1b, Fig. 1c. To avoid repetition, similar elements will not be described again.

In the image 30 of the method according to the embodiment of Fig. 2a and Fig. 2b the lower edge of the uppermost object 20a is visible in the image 30 and used to determine the vertical edge position 28.

Respective embodiments of the method are typically advantageous when the viewpoint of the image 30 is located above an extension 12a of the upper surface of the shelf 12. The extension 12a is not a physical element of the shelf 12, but rather a reference object constructed mathematically to extend the upper surface of the shelf 12. When the viewpoint of the image 30 is located above the extension 12a of the upper surface of the shelf 12, the position of the lower edge of the uppermost object 20a varies more strongly with the number of objects 20, 20a stored on the shelf 12 than the position of the upper edge of the uppermost object 20a. For this reason, the use of the lower edge improves the accuracy of the method.

Referring back to Fig. 1a, Fig. 1b, and Fig. 1c, in the respective embodiment, the viewpoint of the image 30 is located below the extension 12a of the upper surface of the shelf 12, and the upper edge of the uppermost object 20a is used to determine the vertical edge position 28. When the viewpoint of the image 30 is located below the extension 12a of the upper surface of the shelf 12, the position of the lower edge of the uppermost object 20a is typically not visible in the image 30, although it may be, if the shelf 12 is transparent or comprises transparent sections such as openings, like in the embodiment of Fig. 1b, Fig. 1c. The position of the upper edge can still be determined reliably, improving the reliability of the method.

In the embodiment of Fig. 2a and Fig. 2b, the position of the lower edge is determined as the vertical edge position 28, and the number of objects 20, 20a is derived from the respective vertical edge position 28. This is a difference to the embodiments of Fig. 1a, Fig. 1b, and Fig. 1c, which use the position of the upper edge as the vertical edge position 28. Apart from this difference, the embodiment of Fig. Fig. 2a and Fig. 2b is similar to the embodiments of Fig. 1a, Fig. 1b, and Fig. 1c, and similar process steps are applied.

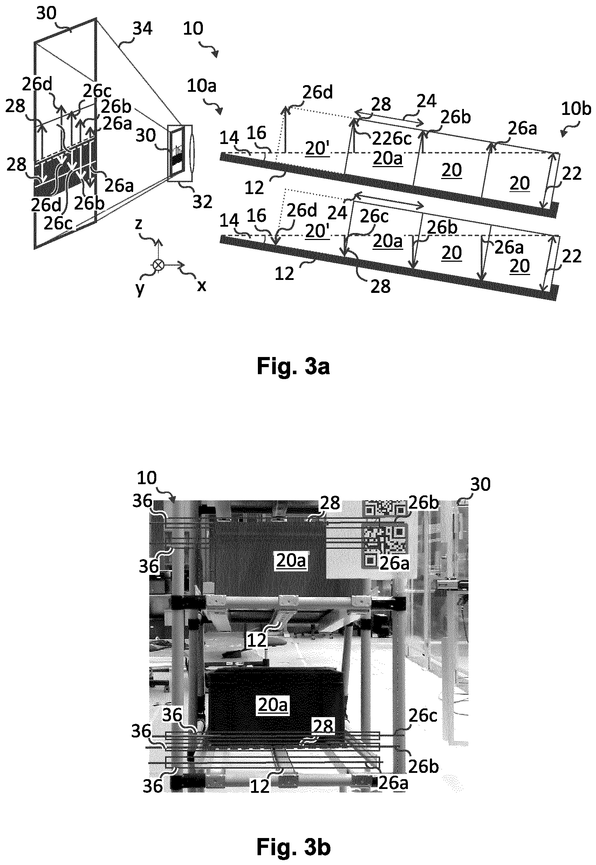

Fig. 3a and Fig. 3b illustrate an embodiment of the method similar to the embodiment of Fig. 1a, to the embodiment of Fig. 1b, Fig. 1c, and similar to the embodiment of Fig. 2a and Fig. 2b. To avoid repetition, similar elements will not be described again.

In the embodiment of Fig. 3a, Fig. 3b, the image 30 is an image 30 of several shelves 12 of the flow rack 10 arranged above each other. The method described above in the context of Fig. 1a to Fig. 2b is performed with respect to each of the shelves 12 of the flow rack 10 present in the image 30, to determine the inventory/filling level/number of objects 20, 20a stored on each of the shelves 12.

In the depicted embodiment, the viewpoint of the image 30 is located above the extension 12a of the upper surface of the lower ones of the shelves 12, and below the extension 12a of the upper surface of the upper ones of the shelves 12.

In alternative embodiments (not shown) the viewpoint of the image 30 is located above the extension 12a of the respective upper surfaces of each of the shelves 12 present in the image 30.

In alternative embodiments (not shown) the viewpoint of the image 30 is located below the extension 12a of the respective upper surfaces of each of the shelves 12 present in the image 30.

In alternative embodiments (not shown) the viewpoint of the image 30 is located below the extension 12a of the respective upper surfaces of a first number of shelves 12 present in the image 30, and the viewpoint of the image 30 is located above the extension 12a of the respective upper surfaces of a second number of shelves 12 present in the image 30.

Preferably, the method is performed according to the embodiments of Fig. 1a, Fig. 1b, and Fig. 1c for those shelves 12 present in the image 30, for which the viewpoint of the image 30 is located below the extension 12a of the upper surface of the respective shelf 12; and the method is performed according to the embodiment of Fig. 2a and Fig. 2b for those shelves 12 present in the image 30, for which the viewpoint of the image 30 is located above the extension 12a of the upper surface of the respective shelf 12.

A further modification of the method has been made in the embodiment depicted in Fig. 3a, Fig. 3b: The expected edge positions 26a, 26b are provided with tolerance intervals 36. Only, if the vertical edge position 28 determined from the image 30 is sufficiently close to one of the expected edge positions 26a, 26b (i.e., if the vertical edge position 28 deviates by no more than the associated tolerance interval 36 from the respective expected edge position 26a, 26b), the hypothetical number corresponding to the respective expected edge position 26a, 26b will be derived as the number of objects 20, 20a actually stored on the shelf 12.

If the vertical edge position 28 determined from the image 30 deviates by more than the associated tolerance interval 36 from each of the respective expected edge positions 26a, 26b, 26c, 26d a number of objects 20, 20a stored on the shelf 12 will not be derived. In this case, another image 30 is analyzed accordingly, for example, taken from a camera 32 mounted to a vehicle 50 at a later time, or with the camera 32 located at a different position, respectively. This procedure is repeated until the vertical edge position 28 determined from one of the images 30 deviates from one of the expected edge positions 26a, 26b, 26c, 26d by no more than the associated tolerance interval 36.

The associated tolerance intervals 36 are considerably smaller than the distance between neighboring ones of the expected edge positions 26a, 26b, 26c, 26d.

The application of the tolerance intervals 36 avoids a situation, in which an edge detected in the image 30, but unrelated to an uppermost object 20a, e.g., in the background of the image 30, is erroneously assigned to an upper edge or a lower edge of an uppermost object 20a. Application of the tolerance intervals 36 hence improves the reliability of the method.

The application of the tolerance intervals 36 has been described in the context of the embodiment of Fig. 3a, Fig. 3b. However, the tolerance intervals 36 can as well be applied in the context of the method according to any of the other embodiments, such as any of the embodiments described in the context of Fig. 1a to Fig. 2b.

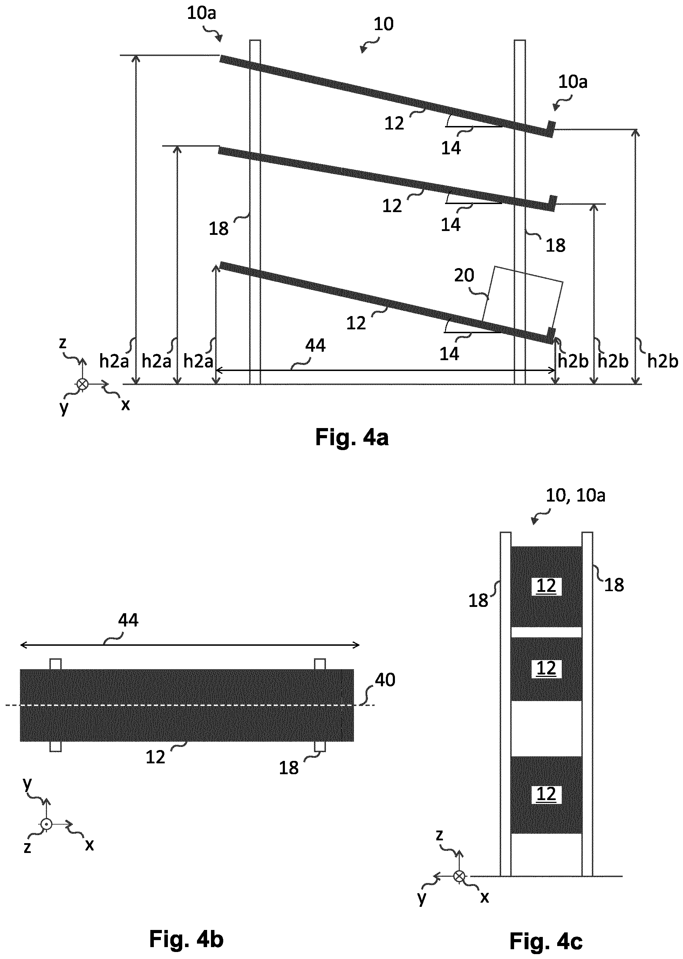

Fig. 4a, Fig. 4b, and Fig. 4c illustrate a flow rack 10.

In the depicted embodiment, the flow rack 10 comprises 3 shelves 12, but according to alternative embodiments (not shown), any number of shelves 12 from one to seven is possible.

In particular in the context of a modular flow rack 10, the shelf 12 is also referred to as a row 12 of bay compartments. Said modular flow racks 10 comprise an adjustable number of bays (or columns of bay compartments, respectively). The length of a bay compartment is identical to the length of the bay that the respective bay compartment is comprised in. In respective embodiments, the length 44 of the modular flow rack 10, or of its shelf 12, respectively, is determined by the overall length of the modular flow rack 10, or of a row 12 of bay compartments spanning the flow rack 10, respectively (rather than by the length of an individual bay, or an individual bay compartment, respectively). The bays typically have identical lengths, and in respective embodiments the length 44 of a modular flow rack 10, or of the shelf 12, respectively, is given by the identical length of the bays multiplied by the number of number of bays.

The shelves 12 are supported by pillars 18.

The tilting angles 14 of the shelves 12 differ in the depicted embodiment. According to alternative embodiments (not shown), the tilting angles 14 of one or all the shelves 12 of one flow rack 10 are identical. The tilting angles 14 are typically in the range from 5° to 10°. In some embodiments, the tilting angles 14 are adjustable and changed, for example, during a changeover in the production process in response to a change in the length, height and/or weight of the objects 20, 20a to be stored on the shelves 12.

The shelves 12 are arranged at heights (shelf heights) h2b on the output side 10b of the flow rack 10. The respective shelf heights h2b are in the range from 0,7 m to 1,9 m. The shelf heights h2b on the input side 10a of the flow rack 10 are similar, although in general slightly larger as dictated by the tilting angle 14 and the length 44 of the flow rack 10.

The tilting direction 40 is typically identical to a length direction of the shelf 12, or of the flow rack 10, respectively. Throughout the figures, the x direction of the coordinate system has been aligned with the tilting direction 40.

Fig. 5a and Fig. 5b illustrate process steps for calculating expected edge positions 26a, 26b, 26c, 26d, which are applied in some embodiments of the method.

In the respective embodiments, an imaging device 32 in the form of a camera 32 acquires the image 30. The camera 32 is located at an imaging device height h4, which thus determines the image viewpoint height h3, absolute or relative to the shelf height h2a, h2b.

The camera 32 is located at a distance 48 from the flow rack 10, or from the shelves 12 thereof, respectively; more specifically, at the input side 10a. The distance between the camera 32 and the flow rack 10, or the shelves 12, respectively, at the output side 10b, is given by the sum of the aforementioned distance 48 and the length 44 of the shelf 12.

The camera 32 has a vertical viewing direction 58, which is orientated along a horizontal direction x in the depicted embodiment. The vertical viewing direction 58 can be defined as the angle between the optical axis of the camera, or of its optics, respectively, and a horizontal plane x-y, 16. In other words, an object located along the vertical viewing direction 58 of the camera 32 is imaged by the camera 32 onto a central line of pixels of the detector 84 of the camera 32.

The camera 32 has a vertical angle of view 38, also referred to as a the vertical frustum 38. Any object within a segment with an opening angle of +/- half the vertical angle of view 38 around the vertical viewing direction 58 is imaged by the camera 32 onto its detector 84, i.e., for as long as a line of sight exists between the camera 32 and the object. An object located on the edge of the respective segment, or at an angle of +/- half the vertical angle of view 38 with respect to the vertical viewing direction 58 is imaged onto the lowermost or uppermost line of pixels of the detector 84 of the camera 32.

As illustrated in Fig. 5b, based on the knowledge about the vertical angle of view 38, any vertical pixel position z1 on the detector 84 of the camera 32 can be mapped to an observation angle 82, at which an object imaged onto the respective pixel position z1 on the detector 84 is located with respect to the vertical viewing direction 58:

(I) tan(half the vertical angle of view 38) = pixel position z0 on the detector 82/distance 86 of detector 84 from principal plane camera optics

(II)tan(observation angle 82) = pixel position z1 on the detector 84 /distance 86 of detector 84 from principal plane camera optics

Dividing II/I eliminates the distance 86 of the detector 84 from the principal plane camera optics, and yields:

$$\text{(III)} \quad \text{observation angle 82} = \arctan[\tan(\text{half the vertical angle of view 38}) \times z1 / z0].$$

Herein, depending on whether or not the camera 32 inverts the orientation of the image 30 along the vertical direction z, the pixel position z1 is to be multiplied by -/+ 1, as is clear to the person skilled in the art.

According to some embodiments, expected positions of the lower edge of the uppermost object 20a are calculated for different numbers n of objects stored on the shelf 12. More specifically, the respective expected positions are calculated in terms of the corresponding angles 42 with respect to the vertical viewing direction 58 of the camera 32. In the respective embodiments, the vertical edge positions 28 correspond to the position of the respective lower edges. It is clear to the person skilled in the art, that vertical edge positions 28 corresponding to the position of the respective upper edges can be calculated in a similar manner, by taking into account the apparent height 88 of the objects 20, 20a, which is determined by their height 22 and the tilting angle 14 as cosine(tilting angle 14) = apparent height 88/object height 22.

In the calculation according to said embodiments, the tangent of the angle 42 is given by the ratio of the vertical position V of the lower edge with respect to the vertical viewing direction 58, over the distance D of the respective lower edge from the camera 32: tan(angle 42) = vertical position V/distance D.

The vertical position V of the lower edge with respect to the vertical viewing direction 58 is given by the difference h2a - h3, reduced by the product of the number n of objects 20, 20a arranged on the shelf 12, the length 24 of the objects 20, 20a, and the sine of the tilting angle 14:

$$V = (\text{h2a} - \text{h3}) - n \times \text{length 24 of objects 20, 20a} \times \sin(\text{tilting angle 14}).$$

The distance D of the respective lower edge from the camera 32 is given by the sum of the aforementioned distance 48 and the length 44 of the shelf 12, reduced by the product of the number n of objects 20, 20a arranged on the shelf 12, the length 24 of the objects 20, 20a, and the cosine of the tilting angle 14:

D = distance 48 + length 44 of the shelf 12 - n × length 24 of objects 20, 20a × cos(tilting angle 14).

Both V and D depend on the number n of objects 20, 20a arranged on the shelf 12, permitting to calculate the angle 42 = arctangent(vertical position V/distance D) for various numbers n of objects 20, 20a. As laid out above, in a similar manner the respective angles 42 for vertical edge positions 28 corresponding to upper edges of the uppermost objects 20a arranged on the shelves 12 can be calculated.

According to an embodiment of the invention corresponding to the embodiment C of the method as described in the context of Fig. 1a, angles 42 are calculated for different hypothetical numbers of objects 20, 20a on the shelf 12. These angles 42 are then converted, using equation (III) above (with the angles 42 as the observation angles 82) into corresponding expected pixel positions. These expected pixel positions are used as expected edge positions 26a, 26b, 26c, 26d, and compared to the vertical edge position 28 determined in the image 30. Preferably, although this is not necessary, a corresponding tolerance interval 36 is provided with each of the expected edge positions 26a, 26b, 26c, 26d, and the vertical edge position 28 is considered to match one of the expected edge positions 26a, 26b, 26c, 26d, if it lies within the corresponding tolerance interval 36.

The numbers of objects 20, 20a on a shelf 12 for which the angle 42 is calculated are hypothetical in a sense that each of them poses a hypothesis to be tested: When the calculation is performed for a first hypothetical number, a first hypothetical expected edge position results. By comparing this expected edge position to a vertical edge position 28 determined from an image 30, the hypothesis, whether the number of objects 20, 20a actually stored on the shelf 12 is the respective hypothetical number for which the angle 42 has been calculated, is tested.

According to an embodiment of the invention, corresponding to the embodiment D of the method as described in the context of Fig. 1a, a vertical pixel position z1, at which a vertical edge position 28 has been determined in the image 30, is converted into an observation angle 82 using equation (III) above. The resulting observation angle 82 is used as the angle 42 in the equation tan(angle 42) = vertical position V/distance D to calculate a corresponding number n of objects 20, 20a. Notably, the equation cannot analytically be solved with respect to the number n of objects 20, 20a, but the value of n needs to be calculated numerically. Because of unavoidable measurement and calculation inaccuracies, the resulting number n of objects 20, 20a is, in general, not an integer number, and is rounded to the closest integer number to derive the number of objects actually arranged on the shelf 12.

Fig. 6 illustrates a camera 32 for some embodiments of the descried method. According to Fig. 6, the camera 32 is mounted to a vehicle 50. Although two cameras 32 are shown in Fig. 6, only one of them may be present according to alternative embodiments (not shown).

The vehicle 50 is a transport vehicle 50 for transporting objects 20, 20a such as the small load carriers described above. More specifically, the vehicle 50 is a vehicle 50 for transporting the objects 20, 20a to a position at the input side 10a of a flow rack 10 for replenishing the flow rack 10 with the objects 20, 20a. For example, the vehicle 50 is a forklift or a platform vehicle, such as a conventional forklift or platform vehicle for a human driver, or an autonomous forklift or platform vehicle for transporting the objects 20, 20a in an automatized manner.

Respective transport vehicles 50 are readily available in an industrial production environment in which the flow rack 10 is typically used. Hence, mounting the camera 32 to a respective transport vehicle 50 makes additional use of available resources (i.e., vehicles 50) and avoids the need for additional equipment and/or investments and related expenses. The transport vehicle 50 provides various resources and equipment used by the camera 32 and/or by the method, respectively:

First, the drive system of the vehicle 50 is used to move the camera 32, such that an additional drone, robot, etc. for moving the camera 32 does not need to be brought into the production environment. This improves the safety and leaves more space available in the production environment.

The battery system of the vehicle 50 is used to supply the camera with electrical power. This reduces the number of batteries in the industrial control environment and thus improves the fire safety.

According to some embodiments, the navigation, location, and/or sensor system of the vehicle 50 are/is used to determine the position and orientation of the camera 32. For example, in some embodiments, whenever the vehicle 50 reaches a predetermined position at the input side 10a of the flow rack 10, corresponding to a position of the camera 32 as described in the context of Fig. 1a to Fig 3b, the camera 32 is triggered to acquire the image 30.

In alternative embodiments, the camera 32 acquires images continuously, and a pattern recognition process is continuously performed on the images acquired continuously. When the pattern recognition process identifies an input side 10a of a flow rack 10 in one of the continuously acquired images, the described method 60 is performed on the respective image 30 to determine the inventory of a shelf 12 or of all the shelves 12 of the respective flow rack 10.

According to some embodiments, the vehicle 50 further provides a processor 76 and a memory 78 to execute at least one of the process steps of the method according to one of the embodiments described above. Preferably, the processor 76 and the memory 78 execute all the process steps of the method according to one of the embodiments laid out above.

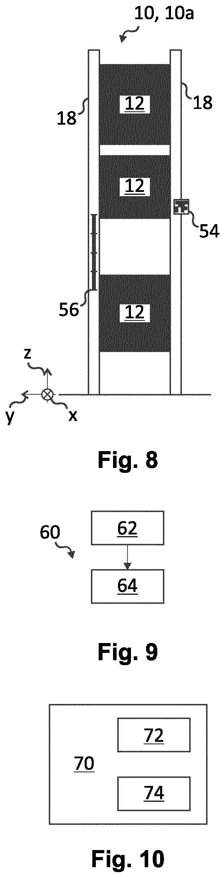

Further, an electronic communication system 90 of the vehicle 50 is used to receive the information relating to the objects 20, 20a (e.g., object height 22, object length 24) and/or to the flow rack 10, or to the shelf 12, respectively (e.g., shelf height(s) 2a, 2b; shelf length 44; tilting angle(s) 14 etc.). In some embodiments, as will be laid out in more detail in the context of Fig. 8, the shelf 12 and/or the flow rack 10 are/is equipped with an identifier 54, and the respective information is requested based on the identifier 54, namely from a server 80. More specifically, the camera 32 is preferably used to read the identifier 54, and the request to the server 80 is triggered when an identifier 54 is present in an image 30 from the camera 32.

In some embodiments, the electronic communication system 90 of the vehicle 50 is used to send the derived number of objects 20, 20a stored on the shelf 12 to a server 80, which can be the same server 80 as described in the previous paragraph or an additional server 80. In respective embodiments, the server 80 receives the derived number of objects 20, 20a, and processes the respective information for scheduling a replenishment of the shelf 12, for example, when the filling level of the shelf 12 is below a critical threshold, or based on an artificial intelligence which has been trained to predict based on the derived number of objects 20, 20a when the next replenishment will be needed.

More specifically, a machine-learning model such as an artificial neural network is trained using the following training data: derived number of objects 20, 20a and corresponding time stamp; and time stamps reflecting the moments in time when a replenishment of the flow rack actually occurred. The latter are typically available from the server 80, if not, the machine-learning model is trained only on the derived number of objects 20, 20a and the corresponding time stamps. The machine-learning model is trained to provide a prognosis function outputting the remaining time until a replenishment will need to be performed, and a reliability measure, reflecting the reliability of the outputted remaining time. If the reliability measure drops below a pre-selected threshold value, the vehicle 50 is ordered to move to the respective flow rack 10 and to acquire an image 30, and the method 60 is performed to determine the inventory of the shelf 12, or of the flow rack 10, respectively, to improve the reliability of the prognosis.

Further, a movable part, such as the fork, of the vehicle 50 is used to adjust the camera height h3. This way, the camera 32 can be used to determine the vertical edge position 28 of various shelves 12 of a flow rack 10, even if the shelves 12 are located at significantly different shelf heights h2a, h2b.

The lighting system of the vehicle 50, such as the headlamp of the vehicle 50, may improve the image quality of the image 30 acquired using the camera 32.

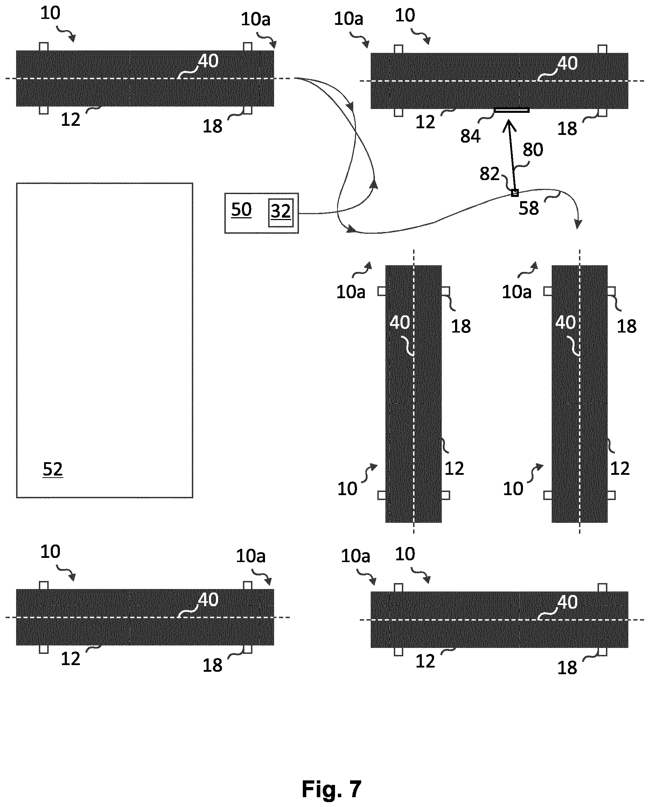

Fig. 7 illustrates the route 58 of a vehicle 50. Coming from a storage 52, at which objects 20, 20a are stored, the vehicle 50 moves to the input side 10a of one of the flow racks 10 to deliver objects 20, 20a. When the vehicle 50 reaches a predetermined position at said input side 10a, namely the input side 10a of the flow rack 10 to the upper left in Fig. 7, the camera 32 is triggered to acquire an image 30.

According to some embodiments, the mobile camera 32 mounted to the vehicle 50 is used to acquire a front-view image of the flow rack 10 for determining one, all, or any combination of the following: the information about the tilting angle 14, the information about the length of the shelf 12, the information about the object height 22, the information about the object length 24 and/or the information about the image viewpoint height h3 relative to the shelf height h2a, h2b. For this purpose, when the vehicle 50 is located, according to its location sensors, at a position 82 where the angle at which the camera 32 mounted thereon views the flow rack 10 at a sufficiently large angle with respect to the tilting direction 40 (e.g., at least 30° or approximately 90°, the latter corresponding to a perpendicular view, or a perfect front view, respectively), the camera 32 acquires said front-view image of the shelf 12. In Fig. 7 and according to a preferred embodiment, the resulting angle between the viewing direction 80 of the camera 32 and the tilting direction 40 is approximately 90°.

Using techniques known from the prior art (e.g., the "Perspective Reference" function of the ImageMeter software available at https://imagemeter.com), the aforementioned information (i.e., the information about the tilting angle 14, the information about the length of the shelf 12, the information about the object height 22, the information about the object length 24 and/or the information about the image viewpoint height h3 relative to the shelf height(s) h2a, h2b) is extracted from the front-view image, e.g., based on the identification of beams, i.e., side views of the shelves 12, and on the identification of beams of the small load carriers 20, 20a arranged on the shelf 12, in the front-view image. Preferably, the flow rack 10 is provided with a front-view reference object 84 facing away from the tilting direction 40 to provide a size reference for the extraction of said information. The front-view reference object 84 is similar to the reference object 56 described below in detail, for example taking the form of a QR code.

Fig. 8 illustrates a flow rack 10 for the method according to some embodiments.

The flow rack 10 is equipped with an identifier 54.

Preferably, the identifier 54 is readable by the imaging device 32, such as the camera 32. This is the case in the depicted embodiment, wherein the identifier 54 takes the form of a QR code.

According to some embodiments, information regarding the shelf 12 (e.g., shelf height(s) h2a, h2b; length 44; tilting angle(s) 14 etc.) is encoded in the identifier 54 and is read using the imaging device 32 during/for the method.

According to some embodiments, information regarding the objects 20, 20a (e.g., object height 22, object length 24) stored on the shelf/shelves 12 of the flow rack 10 is encoded in the identifier 54 and is read using the imaging device 32 during/for the method.

According to other embodiments, the identifier 54 is read by the imaging device 32, and a request based on information associated with the identifier 54 (such as a unique identification of the flow rack 10 encoded in the identifier 54) is sent to a server 80 to request the information regarding the shelf 12 and/or the information regarding the objects 20, 20a stored on the shelf/shelves 12 of the flow rack 10.

The flow rack 10 is further equipped with a reference object 56 for determining the distance of the imaging device 32 from the flow rack 10. In some embodiments of the method, the reference object 56 has a predetermined real-world size, the imaging device 32 acquires an image 30 of the reference object 56, and the size of the reference object 56 in the acquired image 30 is determined. By referencing the size of the reference object 56 in the acquired image 30 to the predetermined real-world size of the reference object 56, the distance of the imaging device 32 from the flow rack 10 is determined.

The flow rack 10 according to the depicted embodiment is equipped with both the identifier 54 and the reference object 56.

According to alternative embodiments (not shown), the flow rack 10 is equipped with only one of the two.

In yet other embodiments, a single element serves as both the identifier 54 and the reference object 56. The QR code 54 of the depicted embodiment is particularly suitable for this purpose, when it is provided with a predetermined size. In other words, in the embodiment depicted in Fig. 8, the QR code 54 can provide the identifier 54 and the reference object 56, and the depicted, additional reference object 56 can be omitted.

Fig. 9 illustrates a method 60 according to an embodiment.

The method comprises, at step 62, determining 62, from an image 30 of a shelf 12 of a flow rack 10, a vertical edge position of an upper edge and/or of a lower edge of an uppermost object 20a arranged on the shelf 12.

The method comprises, at step 64, deriving 64 the number of objects 20, 20a arranged on the shelf 12 based on the vertical edge position 28 determined from the image 30.

Fig. 10 illustrates a computer system 70 according to an embodiment. The computer system 70 comprises at least one processor 72 and at least one memory 74.

The at least one processor 72 is adapted to carry out at least one or all the process steps of the method described above.


**Claims**

1.  A computer-implemented method (60) for determining an inventory of a shelf (12) of a flow rack (10),

    wherein the shelf (12) is arranged at a tilting angle (14) with respect to a horizontal reference plane (16, x-y); and
    wherein a number of objects (20, 20a) is arranged on the shelf (12);
    wherein each of the objects (20, 20a) has the same object height (22) and the same object length (24); and
    wherein the method (60) comprises:

    determining (62), from an image (30) of the shelf (12), a vertical edge position (28) of an upper edge and/or of a lower edge of an uppermost object of said number of objects (20, 20a) arranged on the shelf (12); and
    deriving said number of objects (20, 20a) arranged on the shelf (12) based on the vertical edge position (28) determined from the image (30).

2.  The method (60) according to claim 1,

    wherein determining the vertical edge position (28) comprises performing an edge detection on the image (30) of the shelf (12); and/or
    wherein the vertical edge position (28) is determined using information about a vertical angle of view (38) associated with the image (30) of the shelf (12); in particular, wherein the vertical edge position (28) is determined from the relative position of an edge found in the edge detection relative to an upper edge and a lower edge of the image (30) of the shelf (12), the upper edge and the lower edge corresponding to the vertical angle of view (38).

3.  The method according to claim 1 or 2,

    wherein deriving said number of objects (20, 20a) comprises comparing the determined vertical edge position (28) to a plurality of expected edge positions (26a, 26b, 26c, 26d), each of the expected edge positions (26a, 26b, 26c, 26d) corresponding to a vertical position of an upper edge and/or of a lower edge of an uppermost object (20a) for a corresponding hypothetical number of objects (20, 20a) arranged on the shelf (12);
    wherein, optionally:

the expected edge positions (26a, 26b, 26c, 26d) refer to positions of the respective edges as expected in the image (30) of the shelf (12); and/or

each of the expected edge positions (26a, 26b, 26c, 26d) refers to the expected vertical position of an uppermost edge of the respective hypothetical number of the objects (20, 20a) arranged on the shelf (12), and the determined vertical edge position (28) refers to an uppermost edge of the uppermost object of the number of the objects (20, 20a) arranged on the shelf (12).

4. The method (60) according to claim 3, which comprises calculating, using information about the object height (22), information about the object length (24), and information about the tilting angle (14), the plurality of expected edge positions (26a, 26b, 26c, 26d) for the corresponding hypothetical numbers of objects (20, 20a) arranged on the shelf (12);

wherein, optionally, the shelf (12) is located at a shelf height (h2a, h2b); a viewpoint of the image (30) of the shelf (12) is located at an image viewpoint height (h3); and calculating the expected edge positions (26a, 26b, 26c, 26d) uses information about the image viewpoint height (h3) relative to the shelf height (h2a, h2b), or uses information about the image viewpoint height (h3) and the shelf height (h2a, h2b); wherein, optionally, the method (60) comprises retrieving the information about the shelf height (h2a, h2b) and/or about the image viewpoint height (h3) from a database; and/or

wherein, optionally, the shelf (12) is arranged at the tilting angle (14) with respect to the horizontal reference plane (16, x-y) along a tilting direction (40) and the expected edge positions (26a, 26b, 26c, 26d) are calculated further using information about a length of the shelf (12) along the tilting direction (40), in particular, wherein the shelf (12) declines along the tilting direction (40); and/or

wherein, optionally, the method (60) comprises deriving the information about the tilting angle (14) and/or the information about the length of the shelf (12), and optionally, in addition, the information about the object height (22), the information about the object length (24) and/or the information about the image viewpoint height (h3) relative to the shelf height (h2a, h2b), from a front-view image of the shelf (12), wherein the front-view image of the shelf (12) is an image viewing the shelf (12) from a direction (80) at an angle of at least 30° with respect to the tilting direction (40) according to a projection onto the horizontal reference plane (16, x-y), in particular, viewing the shelf (12) from a direction (80) perpendicular to the tilting direction (40) according to a projection onto the horizontal reference plane (16, x-y);

wherein, further optionally:

the method (60) comprises acquiring the front-view image of the shelf (12), for example using an imaging device (32), such as an imaging device (32) mounted to a vehicle (50) and/or an imaging device (32) at a location (82) along said direction; and

the flow rack (10) is provided with a front-view reference object (84), such as a front-view reference object (84) facing away from the tilting direction (40), and the information about the tilting angle (14) and/or the information about the length of the shelf (12), and optionally, in addition, the information about the object height (22), the information about the object length (24) and/or the information about the image viewpoint height (h3) relative to the shelf height (h2a, h2b), is derived from the front-view image of the shelf (12) using the front-view reference object (84) as a size reference.

5. The method (60) according to any of claims 3 or 4, wherein the hypothetical number for which the expected edge position (26a, 26b, 26c, 26d) is closest to the determined vertical edge position (28) is identified as the number of the objects (20, 20a) arranged on the shelf (12);

wherein, optionally:

the method (60) further comprises providing tolerance ranges (36) associated with the expected edge positions (26a, 26b, 26c, 26d);

wherein the hypothetical number for which the expected edge position (26a, 26b, 26c, 26d) is closest to the determined vertical edge position (28) is identified as the number of the objects (20, 20a) arranged on the shelf (12) only if the determined vertical edge position (28) deviates from the respective expected edge position (26a, 26b, 26c, 26d) by no more than the tolerance range (36) associated with the respective expected edge position; and/or

wherein, in case that the determined vertical edge position (28) deviates from the expected edge position (26a, 26b, 26c, 26d) closest to the determined vertical edge position (28) by more than the tolerance range (36) associated with the respective expected edge position (26a, 26b, 26c, 26d), the method (60) comprises: receiving at least one additional image (30) of the shelf (12); repeating the process steps relating to the image (30) of at least one of the previous claims with the at least one additional image replacing the image (30) of the at least one of the previous claims, until the vertical edge position (28) determined from one of the at least one additional images of the shelf (12) deviates from one of the expected edge positions (26a, 26b, 26c, 26d) by no more than the tolerance range (36) associated with the respective expected edge position (26a, 26b, 26c, 26d); and identifying the hypothetical number associated with the respective expected edge position (26a, 26b, 26c, 26d) as the number of the objects (20, 20a) arranged on the shelf (12); and/or

wherein the tolerance ranges (36) associated with neighboring expected edge positions (26a, 26b, 26c, 26d) cover no more than two thirds of the distance between the neighboring expected edge positions (26a, 26b, 26c, 26d), or no more than half the distance between the neighboring expected edge positions (26a, 26b, 26c, 26d), or no more than one third of the distance between the neighboring expected edge positions (26a, 26b, 26c, 26d).

6. The method (60) according to any of the previous claims,

wherein the image (30) of the shelf (12) shows the shelf (12) from the side (10a, 10b), for example from a side (10a) corresponding to an input side (10a) of the flow rack (10); and/or

wherein the shelf (12) is arranged at the tilting angle (14) with respect to the horizontal reference plane (16, x-y) along a tilting direction (40), and wherein the image (30) of the shelf (12) views along the tilting direction (40), in particular, along a direction along which the shelf (12) declines.

7. The method (60) according to any of the previous claims, which comprises, prior to determining the vertical edge position (28) from the image (30) of the shelf (12), acquiring, using an imaging device (32), the image (30) of the shelf (12);

wherein, optionally, the imaging device (32) is located at an imaging device height (h4) when acquiring the image (30) of the shelf (12); and the method (60) uses information about the imaging device height (h4), for example in the process step(s) of determining the vertical edge position (28), deriving the number of objects (20, 20a) arranged on the shelf (12), calculating the expected edge positions (26a, 26b, 26c, 26d), and/or comparing the determined vertical edge position (28) to the expected edge positions (26a, 26b, 26c, 26d);

wherein, optionally:

the expected edge positions (26a, 26b, 26c, 26d) are edge positions as expected in the image (30) of the shelf (12) as acquired using the imaging device (32); and/or

the imaging device height (h4) is a predetermined height, wherein, optionally, the method (60) comprises arranging the imaging device (32) at the predetermined imaging device height (h4); and/or

the method (60) comprises determining the imaging device height (h4), in particular,

using sensor data from an altitude sensor and/or from a location sensor associated with the imaging device (32) and/or from a motion sensor associated with the imaging device (32); and/or

the method (60) uses information about a vertical viewing direction (58) of the imaging device (32), for example in the process step(s) of determining the vertical edge position (28), deriving the number of objects (20, 20a) arranged on the shelf (12), calculating the expected edge positions (26a, 26b, 26c, 26d), and/or comparing the determined vertical edge position (28) to the expected edge positions (26a, 26b, 26c, 26d); and/or

a vertical angle of view (38) of the imaging device (32) determines the vertical angle of view (38) associated with the image (30) of the shelf (12); and/or

the imaging device (32) is aligned to view along a horizontal direction; and/or

the imaging device height (h4) corresponds to the image viewpoint height (h3) of claim 2.

8. The method (60) according to claim 7, wherein the imaging device (32) is mounted to a vehicle (50),

wherein the vehicle (50) is a transport vehicle (50) suitable for or adapted to transport said objects (20, 20a) to the shelf (12), in particular, wherein the vehicle (50) is adapted to replenish the shelf (12) from a first position of the vehicle (50), and wherein the image (30) of the shelf (12) is acquired when the vehicle (50) is at said first position; and/or

wherein the method (60) comprises the features of claim 6, and the image (30) of the shelf (12) is acquired when a horizontal viewing direction of the imaging device (32) faces the shelf (12) from the side, preferably from the side corresponding to the input side of the shelf (12) and/or along the tilting direction; and/or

wherein the method (60) further comprises acquiring, using the imaging device (32), another image (30) of another shelf (12), wherein the other shelf (12) is a shelf (12) of another flow rack (10), wherein the other shelf (12) is arranged at another tilting angle (14) with respect to the horizontal reference plane (16, x-y); wherein a number of other objects is arranged on the other shelf (12); wherein each of the other objects has a same, additional object height (h2a, h2b) and a same, additional object length; and wherein the method (60) further comprises performing all process steps specified in any of the previous claims with respect to the image (30), the flow rack (10), and their associated features with respect to the other image (30), the other flow rack (10), and their associated features; and/or

wherein the method (60) further comprises transporting, using the vehicle (50), further ones of said objects (20, 20a) to the shelf (12) for replenishing the shelf (12).

9.  The method (60) according to any of the preceding claims, wherein an identifier (54) is associated with or arranged on the flow rack (10), wherein the method (60) further comprises:

reading at least one or all of the information about the object height (22), the information about the object length (24), and the information about the tilting angle (14) from the identifier (54), in particular using the imaging device (32) of claim 7; and/or
requesting, using the identifier (54), at least one or all of the information about the object height (22), the information about the object length (24), and the information about the tilting angle (14) from a database; wherein, optionally:

the method (60) further comprises reading the identifier (54) using the imaging device (32) of claim 7, for example from the acquired image; and/or
the database is provided on a remote server (80) remote from the imaging device (32) and/or from said vehicle (50); and/or
a computer is associated with the imaging device (32) and/or arranged in a vicinity of the imaging device (32) and/or arranged on said vehicle (50), the remote server being remote from said computer, wherein, preferably, at least one or both of the process steps of determining (62) the vertical edge position (28) and comparing the determined vertical edge position (28) to expected edge positions (26a, 26b, 26c, 26d) is/are performed on said computer; and/or
the method comprises sending the derived number of objects (20, 20a) arranged on the shelf (12) to the remote server (80), for example from the computer associated with the imaging device (32) and/or arranged in the vicinity of the imaging device (32) and/or arranged on said vehicle (50); and/or
the method (60) further comprises requesting information about the image viewpoint height (h3) and/or about the shelf height (h2a, h2b) of claim 2 from the database, for example using the identifier (54); and/or
the method (60) further comprises requesting information about the tilting direction (40) of claim 2 from the database, for example using the identifier (54).

10. The method (60) according to any of the preceding claims, which further uses information about a first distance (48) between the shelf (12) and a viewpoint of the image (30) of the shelf (12) and/or information about a relative position of the shelf (12) and the viewpoint of the image (30) of the shelf (12), for example in the process step(s) of determining the vertical edge position (28), deriving the number of objects (20, 20a) arranged on the shelf (12), calculating the expected edge positions (26a, 26b, 26c, 26d), and/or comparing the determined vertical edge position (28) to the expected edge positions (26a, 26b, 26c, 26d), wherein, optionally:

a reference object (56) is associated with or arranged on the flow rack (10),
the method (60) comprises the features according to claim 7,
the method (60) comprises imaging the reference object (56) in the acquired image (30), and
the information about the first distance (48) between the shelf (12) and the viewpoint of the image (30) of the shelf (12) and/or the information about the relative position of the shelf (12) and the viewpoint of the image (30) of the shelf (12) is retrieved from the reference object (56) as imaged in the acquired image (30), in particular, wherein the reference object (56) serves as the identifier (54) according to claim 9.

11. The method (60) according to any of the preceding claims,

which further comprises, using the derived number of objects (20, 20a) arranged on the shelf (12), requesting a replenishment of the shelf (12), in particular, if the hypothetical number corresponding to the number of the objects (20, 20a) arranged on the shelf (12) is below a threshold number; and/or
which further comprises, using the derived number of objects (20, 20a) arranged on the shelf (12), inputting the deriving number of objects (20, 20a) arranged on the shelf (12) into a database for training an artificial intelligence to determine when a replenishment of the shelf (12) is to be scheduled; and/or

wherein the flow rack (10) comprises a plurality of shelves comprising said shelf (12) and an additional shelf, wherein an additional number of additional objects are arranged on the additional shelf; wherein each of the additional objects (20, 20a) has the same additional object height (22) and the same additional object length (24); and wherein the method further comprises the following additional process steps:

> determining, from the image of the shelf, an additional vertical edge position of an upper edge and/or of a lower edge of an uppermost object of said additional number of additional objects arranged on the additional shelf; and
>
> deriving said additional number of additional objects arranged on the additional shelf based on the additional vertical edge position determined from the image;
>
> wherein, optionally, the additional process steps are performed for any additional shelf comprised in the flow rack.

12. A computer program comprising instructions which, when the computer program is executed by a computer, cause the computer to carry out the method (60) of any of the preceding claims.

13. A computer system (70) comprising at least one processor (72) and at least one memory (74), the at least one processor (72) being adapted to:

> determine, from an image (30) of a shelf (12) of a flow rack (10), a vertical edge position (28) of an upper edge and/or of a lower edge of an uppermost object of a number of objects (20, 20a) arranged on the shelf (12); and
> derive the number of said objects (20, 20a) arranged on the shelf (12) based on the vertical edge position (28) determined from the image (30);
> wherein the shelf (12) is arranged at a tilting angle (14) with respect to a horizontal reference plane (16, x-y), and wherein the number of objects (20, 20a) arranged on the shelf (12) is derived based on the vertical edge position (28) determined from the image (30) assuming that each of the objects (20, 20a) has the same object height (22) and the same object length (24).

14. The computer system (70) according to claim 13,

> wherein the computer system (70) further comprises an imaging device (32) adapted to acquire the image (30) of the shelf (12) and to provide the image (30) of the shelf (12) to the at least one processor (72); and/or
> wherein the at least one processor (72) is further adapted to receive information about the tilting angle (14) of the shelf (12) with respect to the horizontal reference plane (16, x-y); and/or
> wherein the at least one processor (72) is further adapted to receive information about an object height (22) and information about an object length (24) of objects (20, 20a) suitable for arranging them on the shelf (12); and/or
> wherein the at least one processor (72) adapted to, to derive the number of said objects (20, 20a) arranged on the shelf (12): compare the determined vertical edge position (28) to a plurality of expected edge positions (26a, 26b, 26c, 26d) to determine the hypothetical number corresponding to the number of objects (20, 20a) arranged on the shelf (12), each of the expected edge positions (26a, 26b, 26c, 26d) corresponding to a vertical position of an upper edge and/or of a lower edge of an uppermost object (20a) for a corresponding hypothetical number of objects (20, 20a) arranged on the shelf (12); wherein, optionally, the at least one processor (72) is further adapted to calculate, using the information about the object height (22), the information about the object length (24), and the information about the tilting angle (14), and assuming that each of the objects (20, 20a) has a same height given by the object height (22) and a same length given by the object length (24), the expected edge positions (26a, 26b, 26c, 26d) for the different hypothetical numbers of objects (20, 20a) arranged on the shelf (12).

15. The computer system (70) according to claim 14, further comprising the imaging device (32), which further comprises a vehicle (50), wherein the imaging device (32) is mounted to the vehicle (50);

> wherein, optionally, a processor (76) of the at least one processor (72) and a memory (78) of the at least one memory (74) are arranged on the vehicle (50), and wherein the vertical edge position (28) is determined by the processor (76) arranged on the vehicle (50), wherein, preferably, the determined vertical edge position (28) is compared to the expected edge positions (26a, 26b, 26c, 26d) by the processor (76) and the memory (78) arranged on the vehicle (50); and/or
> wherein, optionally, the computer system (70) further comprises a remote server remote from the vehicle (50) and/or from said processor (76) of the at least one processor (72) and/or from said memory (78) of the at least one memory (74), wherein the remote server is adapted to receive, to store, and/or to process the hypothetical number corresponding to the number of the objects (20, 20a) arranged on the shelf (12); and/or

wherein, optionally, the remote server is adapted to provide the information about the object height (22), the information about the object length (24), and the information about the tilting angle (14) from a database provided on the remote server.

**Fig. 1a**

**Fig. 1b**

**Fig. 1c**

**Fig. 2a**

**Fig. 2b**

**Fig. 3a**

**Fig. 3b**

**Fig. 4a**

**Fig. 4b**

**Fig. 4c**

**Fig. 5a**

**Fig. 5b**

**Fig. 6**

**Fig. 7**

10, 10a

12

18

18

12

54

12

56

z

y    x

**Fig. 8**

60

62

64

**Fig. 9**

70

72

74

**Fig. 10**

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 117 882 962 A (SHENZHEN XIANGCHENG TECH CO LTD) 16 April 2024 (2024-04-16) * the whole document * | 1-15 | INV. G06V30/186 G06V10/12 G06V10/44 |
| A | US 2019/282001 A1 (DENG WEI [CN] ET AL) 19 September 2019 (2019-09-19) * the whole document * | 1-15 | G06V20/52 |
| A | WO 2023/245208 A1 (WIPRO LTD [IN]; WIPRO LTD [US]) 21 December 2023 (2023-12-21) * the whole document * | 1-15 | |
| A | BALASKA VASILIKI ET AL: "Smart counting of unboxed stocks in the Warehouse 4.0 ecosystem", 2022 IEEE INTERNATIONAL CONFERENCE ON IMAGING SYSTEMS AND TECHNIQUES (IST), IEEE, 21 June 2022 (2022-06-21), pages 1-6, XP034152569, DOI: 10.1109/IST55454.2022.9827758 [retrieved on 2022-07-20] * the whole document * | 1-15 | |

TECHNICAL FIELDS
SEARCHED    (IPC)

G06V

The present search report has been drawn up for all claims

| Place of search | Date of completion of the search | Examiner |
|---|---|---|
| The Hague | 14 November 2024 | Loza, Artur |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 2022

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2024

| Patent document cited in search report | Publication date | Patent family member(s) | Publication date |
|---|---|---|---|
| CN 117882962 A | 16-04-2024 | NONE | |
| US 2019282001 A1 | 19-09-2019 | CN 108445493 A | 24-08-2018 |
| | | US 2019282001 A1 | 19-09-2019 |
| WO 2023245208 A1 | 21-12-2023 | NONE | |

EPO FORM P0459

For more details about this annex : see Official Journal of the European Patent Office, No. 12/82